# EUROPÄISCHE PATENTSCHRIFT

(11) **EP 1 610 989 B1**
(45) Veröffentlichungstag und Bekanntmachung des Hinweises auf die Patenterteilung: **20.02.2008**
(21) Anmeldenummer: 04716203.7
(22) Anmeldetag: 02.03.2004
(51) Int. Cl.: B60S 1/24, B60S 1/04

(54) **SCHEIBENWISCHVORRICHTUNG**
WINDSHIELD WIPING DEVICE
SYSTEME D'ESSUIE-GLACE

(30) Priorität: 26.03.2003 DE 10313540
(43) Veröffentlichungstag der Anmeldung: 04.01.2006
(73) Patentinhaber: ROBERT BOSCH GMBH, 70442 Stuttgart (DE)
(72) Erfinder: KNAUF, Richard, F-67480 Roppenheim (FR); DUESTERHOEFT, Richard, 71088 Holzgerlingen (DE)
(86) Internationale Anmeldenummer: PCT/DE2004/000399
(87) Internationale Veröffentlichungsnummer: WO 2004/085217

(56) Entgegenhaltungen:
- WO-A-03/068569
- DE-A- 10 045 573
- US-A- 5 165 159

## Beschreibung

Die Erfindung betrifft eine Scheibenwischvorrichtung, insbesondere für ein Kraftfahrzeug, mit einem Wischergestänge und mindestens einem Wischarm.

Bei modernen Scheibenwischvorrichtungen werden zunehmend Reversiermotoren als Wischerantriebe verwendet. Neben den vielen Vorteilen der Reversiermotoren bestehen jedoch auch höhere Anforderungen bei der Montage von Scheibenwischvorrichtungen mit einem Reversiermotor. Bei der Montage ist es wichtig, eine genaue Ausrichtung zwischen dem Wischarm und dem Wischergestänge sicherzustellen. Wenn die Position des Wischergestänges zum Wischarm verschoben ist, was beispielsweise auch schon während des Transportes passieren kann, ändert sich die Lage des Wischfeldes auf der Scheibe des Kraftfahrzeuges und auch der vorgegebene Wischwinkel. Zusätzlich erschwerend ist für die genaue Montage des Wischarms, dass das Wischergestänge durch eine Abdeckung verdeckt ist. Eine Einstellvorrichtung oder Montagehilfe kann deshalb in der Regel nicht verwendet werden und eine Überprüfung der genauen Positionierung des Wischarms mit dem Wischergestänge ist folglich auch sehr schwierig.

DE-A-100 45 573 offenbart den Oberbegriff des Anspruchs 1.

Die Erfindung hat die Aufgabe, die erforderliche Positionierung von Wischarm und Wischergestänge bei der Montage der Scheibenwischvorrichtung sicherzustellen.

Die Erfindung löst die gestellte Aufgabe durch eine Scheibenwischvorrichtung, gemäß Anspruch 1. Somit wird das Wischergestänge durch die Arretiereinrichtung zur Montage des Wischarms in einer bestimmten Position, die die gewünschte Lage des Wischfeldes auf der Scheibe des Fahrzeuges und den vorgegebenen Wischwinkel sicherstellt, arretiert. In dieser arretierten Position wird der mindestens eine Wischarm an das Wischergestänge montiert. Nach der erfolgten Montage des mindestens einen Wischarms kann die nur für die Montagezwecke erforderliche Arretiereinrichtung gelöst werden.

Zur Lösung der Arretierung kann die Arretiereinrichtung eine Sollbruchstelle aufweisen. Bei der ersten Bestromung des Wischermotors fährt dieser das Wischergestänge in die Parkstellung, wobei die Arretiereinrichtung an der vorgegebenen Sollbruchstelle bricht und somit die Arretierung freigibt. Damit die Arretiereinrichtung schnell und einfach angebracht werden kann, kann sie auf eine Motorkurbel, die zum Wischergestänge gehört, aufgeschoben und anschließend in das Wischergestänge eingehängt werden. In diesem arretierten Zustand wird dann das Wischergestänge dem Automobilhersteller angeliefert, der schließlich bei der Montage der Scheibenwischvorrichtung den mindestens einen Wischarm in der vorgegebenen Position montiert.

Wenn dann nach der Montage des mindestens einen Wischarms bei der ersten Bestromung des Wischermotors dieser in die Parkstellung fährt und dabei die Arretiereinrichtung an der Sollbruchstelle bricht, bleibt die eine Hälfte der Arretiereinrichtung mit dem Wischergestänge und die andere Hälfte der Arretiereinrichtung mit der Motorkurbel fest verbunden. Dadurch ist sichergestellt, dass keine losen Einzelteile der gebrochenen Arretiereinrichtung die Funktion der Scheibenwischvorrichtung beeinträchtigen oder unerwünschte oder irritierende Geräusche verursachen können.

Wenn die Arretierposition des Wischergestänges außerhalb von dessen Arbeitsbereich liegt, ist ausgeschlossen, dass im Betrieb die mit der Motorkurbel und dem Wischergestänge fest verbundenen Einzelteile der Arretiereinrichtung miteinander kollidieren können. Empfehlenswert ist eine Arretierposition, die mindestens 3 bis 5 Grad außerhalb der Parkposition liegt und somit außerhalb des normalen Arbeitsbereiches.

Besonders günstig lässt sich ein Auseinanderliegen der Arretierposition und des Arbeitsbereiches realisieren, wenn die Scheibenwischvorrichtung durch einen Reversiermotor angetrieben wird. Der Reversiermotor ermöglicht es, die auf die Welle des Wischermotors montierte Motorkurbel mit der aufgeschobenen Arretiereinrichtung manuell soweit zurückzudrehen, bis die Arretiereinrichtung in das Wischergestänge eingehängt werden kann. Im Betrieb überstreicht die Motorkurbel nur den Winkel zwischen der unteren und der oberen Umkehrlage, und kehrt nach dem Abschalten der Scheibenwischvorrichtung in die Parkposition zurück. Somit kann die Motorkurbel im Betrieb nicht mehr die Arretierposition einnehmen, in die sie manuell zur Arretierung gebracht wurde.

In einer bevorzugten und relativ einfach gestalteten Ausführungsform weist die Arretiereinrichtung ein rundes Maul auf, an dem seitlich zwei Arme wegführen, und an den Armen jeweils senkrecht zu den Armen ein Fortsatz angebracht ist, wobei sich an einem der Fortsätze ein Haken befindet.

Um die Arretiereinrichtung zuverlässig an der Motorkurbel befestigen zu können, kann das Maul elastisch verformbar sein, so dass es sich nach dem Aufschieben auf die Motorkurbel wieder in seine ursprüngliche Form zurückstellt, und somit ein sicherer Halt der Arretiereinrichtugng auf der Motorkurbel gewährleistet ist.

Zur sicheren Befestigung der Arretiereinrichtung an dem Wischergestänge kann der Haken der Arretiereinrichtung zwei Stege aufweisen, die ebenfalls elastisch biegbar sind. Somit kann die Arretiereinrichtung an dem Wischergestänge zuverlässig befestigt werden, da die Stege einen bestimmten Bereich des Wischergestänges umgreifen und gegen diesen Bereich aufgrund ihrer Elastizität feste angedrückt werden, so dass der Haken auch nach dem Brechen der Arretiereinrichtung im Betrieb und bei Erschütterungen fest an dem Wischergestänge hält.

An der Verbindungsstelle zwischen dem Arm und dem mit dem Haken verbundenen Fortsatz kann die Sollbruchstelle vorgesehen sein. Wenn die Sollbruchstelle in diesem Bereich angeordnet ist, gewährleistet sie eine sichere Arretierung bis zur ersten Bestromung des Wischermotors und außerdem ein zuverlässiges Brechen bei der ersten Bestromung des Wischermotors.

Nachfolgend wird ein Ausführungsbeispiel anhand der beiliegenden Zeichnungen näher erläutert.

Im Einzelnen zeigen:
- Fig. 1: eine perspektivische Ansicht der erfindungsgemäßen Arretiereinrichtung;
- Fig. 2: eine perspektivische Ansicht auf eine Motorkurbel mit der aufgeschobenen Arretiereinrichtung aus Fig. 1;
- Fig. 3: eine perspektivische Ansicht auf ein arretiertes Wischergestänge;
- Fig. 4: eine Draufsicht auf das arretierte Wischergestänge aus Fig. 3;
- Fig. 5: eine Draufsicht auf das Wischergestänge nach der ersten Bestromung.

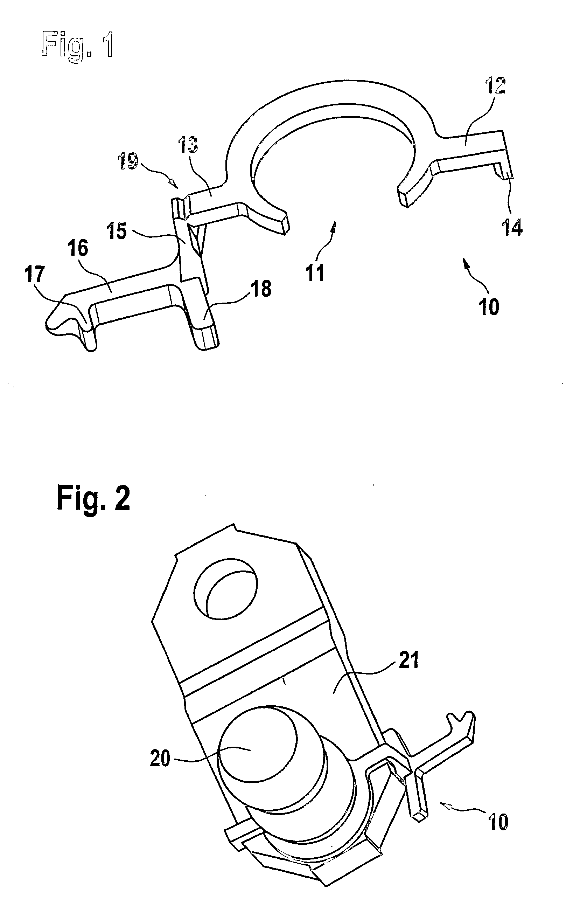

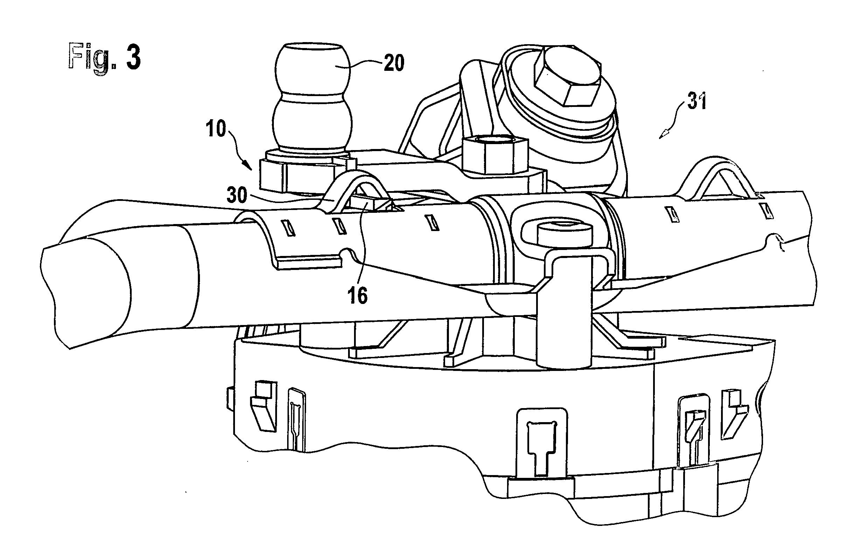

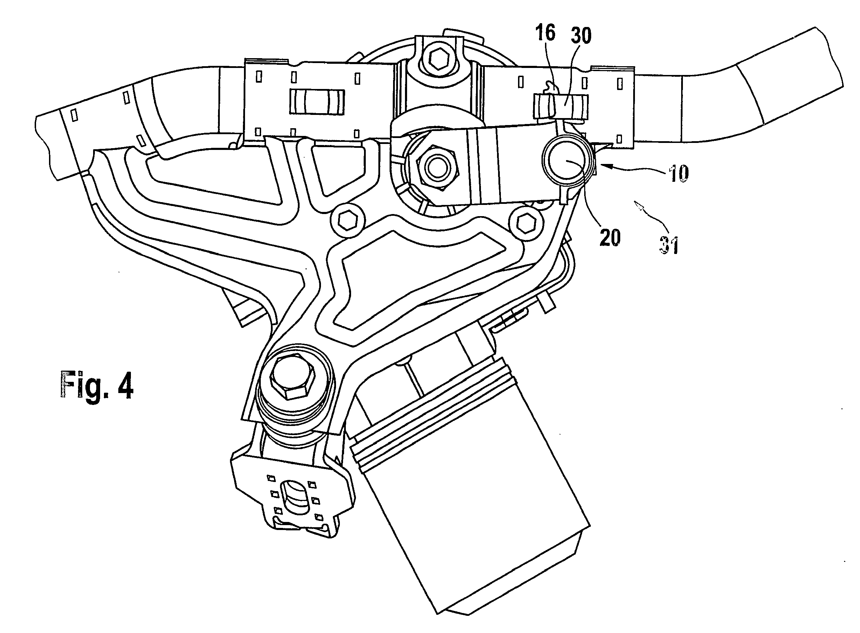

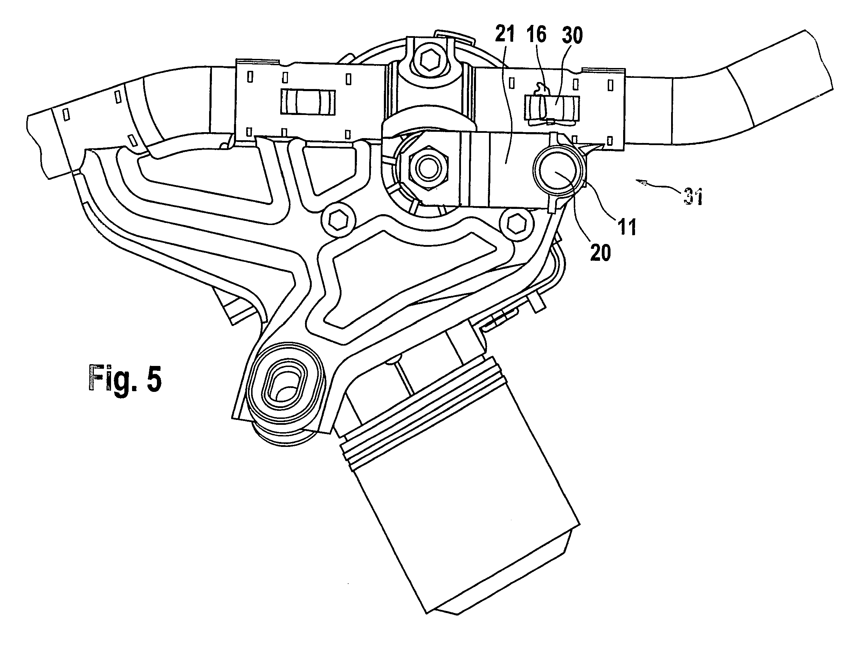

Fig. 1 zeigt eine Arretiereinrichtung 10 mit einem Maul 11, das einen Kugelbolzen 20 einer Motorkurbel 21 aufnehmen kann (siehe Fig. 2). Beim Aufschieben der Arretiereinrichtung 10 auf den Kugelbolzen 20 weitet sich das Maul 11 elastisch auf und schnappt, wenn der Kugelbolzen 20 aufgenommen ist, in seine ursprüngliche Form zurück. Somit hält das Maul 11 die Arretiereinrichtung 10 an dem Kugelbolzen 20 zuverlässig fest. An dem Maul 11 sind seitlich Arme 12 und 13 angebracht. An den Armen 12 und 13 befinden sich Fortsätze 14 und 15, die zur formschlüssigen Verbindung der Arretiereinrichtung 10 mit der Motorkurbel 21 dienen (siehe Fig. 2). An dem Fortsatz 15 ist ein Haken 16 angebracht, der zwei Stege 17 und 18 besitzt. An der Verbindungsstelle zwischen dem Arm 13 und dem Fortsatz 15 befindet sich eine Sollbruchstelle 19, an der die Arretiereinrichtung 10 nach einer ersten Bestromung bricht. Nachdem die Arretiereinrichtung 10 auf den Kugelbolzen 20 aufgeschoben ist, wird die Motorkurbel 21 manuell soweit zurückgedreht, bis der Haken 16 in einer dafür vorgesehenen Einrichtung 30 (siehe Fign. 3 und 4) eingehängt werden kann. In diesem arretierten Zustand wird ein Wischergestänge 31 dem Automobilhersteller zugeliefert, damit dieser dann in der arretierten Position mindestens einen Wischarm montieren kann. Nach erfolgter Montage des mindestens einen Wischarms wird ein Wischermotor erstmals bestromt, so dass der mindestens eine Wischarm in seine Parkstellung gefahren wird, wobei die Arretiereinrichtung 10 an ihrer Sollbruchstelle 19 bricht (siehe Fig. 5). Folglich löst sich die Arretiereinrichtung 10 selbsttätig, weil ihre Demontage nach der Montage des mindestens einen Wischarms nur sehr schwer möglich ist und weil auch die Gefahr besteht, dass die Arretiereinrichtung 10 vergessen werden könnte. Nach dem Brechen der Arretiereinrichtung 10 bleiben der Haken 16 an der Einrichtung 30 und das Maul 11 an dem Kugelbolzen 20 fest verbunden. Dadurch ist ausgeschlossen, dass der Haken 16 und das Maul 11 die Funktion der Scheibenwischvorrichtung beeinträchtigen oder während des Betriebes unerwünschte und irritierende Geräusche verursachen können. Da die Motorkurbel 21 manuell in die Arretierposition gebracht wurde und die Arretierposition außerhalb des Arbeitsbereiches des Wischergestänges 31 liegt, besteht auch nicht die Gefahr einer unerwünschten Kollision zwischen dem Haken 16 und dem Maul 11 während des Wischbetriebs.

## Patentansprüche

1. Scheibenwischvorrichtung, insbesondere für ein Kraftfahrzeug, mit einem Wischergestänge (31) und mindestens einem Wischarm, **dadurch gekennzeichnet, dass** das Wischergestänge (31) mit einer Arretiereinrichtung (10) vorgesehen ist, das das Wischergestänge (31) bei der Montage in einer bestimmten Position arretiert und die nach der Montage gelöst wird.

2. Scheibenwischvorrichtung nach Anspruch 1, **dadurch gekennzeichnet, dass** die Arretiereinrichtung (10) eine Sollbruchstelle (19) zur Lösung der Arretierung des Wischergestänges (31) aufweist.

3. Scheibenwischvorrichtung nach Anspruch 1 oder 2, **dadurch gekennzeichnet, dass** die Arretiereinrichtung (10) auf eine Motorkurbel (21) aufschiebbar und in das Wischergestänge (31) einhakbar ist.

4. Scheibenwischvorrichtung nach Anspruch 2 und 3, **dadurch gekennzeichnet, dass** nach dem Brechen der Sollbruchstelle (19) die eine Hälfte der Arretiereinrichtung (10) mit dem Wischergestänge (31) und die andere Hälfte der Arretiereinrichtung (10) mit der Motorkurbel (21) fest verbunden bleibt.

5. Scheibenwischvorrichtung nach einem der Ansprüche 1 bis 4, **dadurch gekennzeichnet, dass** die Arretierposition des Wischergestänges (31) außerhalb von dessen Arbeitsbereich liegt.

6. Scheibenwischvorrichtung nach Anspruch 5, **dadurch gekennzeichnet, dass** sie durch einen Reversiermotor antreibbar ist.

7. Scheibenwischvorrichtung nach einem der Ansprüche 1 bis 6, **dadurch gekennzeichnet, dass** die Arretiereinrichtung (10) ein rundes Maul (11) hat, an dem seitlich zwei Arme (12, 13) wegführen und an den Armen (12, 13) jeweils senkrecht zu den Armen (12, 13) ein Fortsatz (14, 15) angebracht ist, wobei sich an einem der Fortsätze (14, 15) ein Haken (16) befindet.

8. Scheibenwischvorrichtung nach Anspruch 7, **dadurch gekennzeichnet, dass** das Maul (11) elastisch verformbar ist.

9. Scheibenwischvorrichtung nach Anspruch 7 oder 8, **dadurch gekennzeichnet, dass** der Haken (16) zwei Stege (17, 18) aufweist, die elastisch biegbar sind.

10. Scheibenwischvorrichtung nach einem der Ansprüche 7 bis 9, **dadurch gekennzeichnet, dass** an der Verbindungsstelle zwischen dem Arm (13) und dem mit dem Haken (16) verbundenen Fortsatz (15) die Sollbruchstelle (19) vorgesehen ist.

## Claims

1. Windscreen wiping device, in particular for a motor vehicle, with a wiper linkage (31) and at least one wiper arm, **characterized in that** the wiper linkage (31) is provided with a locking mechanism (10) which locks the wiper linkage (31) in a certain position during installation and which is released after installation.

2. Windscreen wiping device according to Claim 1, **characterized in that** the locking mechanism (10) has a predetermined breaking point (19) for releasing the locking of the wiper linkage (31).

3. Windscreen wiping device according to Claim 1 or 2, **characterized in that** the locking mechanism (10) can be pushed onto a motor crank (21) and can be hooked into the wiper linkage (31).

4. Windscreen wiping device according to Claims 2 and 3, **characterized in that**, after the breaking of the predetermined breaking point (19), one half of the locking mechanism (10) remains fixedly connected to the wiper linkage (31) and the other half of the locking mechanism (10) remains fixedly connected to the motor crank (21).

5. Windscreen wiping device according to one of Claims 1 to 4, **characterized in that** the locking position of the wiper linkage (31) lies outside the operating region thereof.

6. Windscreen wiping device according to Claim 5, **characterized in that** it can be driven by a reversing motor.

7. Windscreen wiping device according to one of Claims 1 to 6, **characterized in that** the locking mechanism (10) has a round mouth (11) at which two arms (12, 13) lead away laterally and at which an extension (14, 15) is provided on the arms (12, 13), in each case perpendicular to the arms (12, 13), with a hook (16) being located on one of the extensions (14, 15).

8. Windscreen wiping device according to Claim 7, **characterized in that** the mouth (11) can be deformed elastically.

9. Windscreen wiping device according to Claim 7 or 8, **characterized in that** the hook (16) has two webs (17, 18) which can be bent elastically.

10. Windscreen wiping device according to one of Claims 7 to 9, **characterized in that** the predetermined breaking point (19) is provided on the connecting point between the arm (13) and the extension (15) which is connected to the hook (16).

## Revendications

1. Dispositif d'essuie-glace, notamment pour un véhicule automobile, comportant une tringlerie d'essuie-glace (31) et au moins un bras d'essuie-glace,
**caractérisé en ce que**
la tringlerie (31) est munie d'un dispositif de blocage (10) qui, au montage, bloque la tringlerie d'essuie-glace (31) dans une certaine position et la libère après le montage.

2. Dispositif d'essuie-glace selon la revendication 1,
**caractérisé en ce que**
le dispositif de blocage (10) comporte un point de rupture de consigne (19) pour libérer le blocage de la tringlerie d'essuie-glace (31).

3. Dispositif d'essuie-glace selon la revendication 1 ou 2,
**caractérisé en ce que**
le dispositif de blocage (10) se glisse sur une manivelle de moteur (21) et s'accroche dans la tringlerie d'essuie-glace (31).

4. Dispositif d'essuie-glace selon l'une des revendications 2 et 3,
**caractérisé en ce qu'**
après la rupture du point de rupture de consigne (19), une moitié du dispositif de blocage (10) reste sur la tringlerie d'essuie-glace (31) et l'autre moitié du dispositif de blocage (10) reste solidaire de la manivelle de moteur (21).

5. Dispositif d'essuie-glace selon l'une des revendications 1 à 4,
**caractérisé en ce que**
la position de blocage de la tringlerie d'essuie-glace (31) se situe à l'extérieur de sa zone de fonctionnement.

6. Dispositif d'essuie-glace selon la revendication 5,
**caractérisé en ce qu'**
il est entraîné par un moteur réversible.

7. Dispositif d'essuie-glace selon l'une des revendications 1 à 6,
**caractérisé en ce que**
l'installation de blocage (10) comporte une ouverture circulaire (11) avec deux bras latéraux (12, 13) et chaque fois un prolongement (13, 14) perpendiculaire aux bras (12, 13), et l'un des prolongements (14, 15) comporte un crochet (16).

8. Dispositif d'essuie-glace selon la revendication 7,
**caractérisé en ce que**
l'ouverture (11) est déformable élastiquement.

9. Dispositif d'essuie-glace selon les revendications 7 ou 8,
**caractérisé en ce que**
le crochet (16) comporte deux branches (17, 18) déformables élastiquement.

10. Dispositif d'essuie-glace selon l'une des revendications 7 à 9,
**caractérisé en ce que**
le point de rupture de consigne (19) se trouve au point de liaison entre le bras (13) et le prolongement (15) muni du crochet (16).
